(19) Europäisches Patentamt

European Patent Office

Office européen des brevets

(11) EP 1 571 168 A1

(12) EUROPÄISCHE PATENTANMELDUNG

(43) Veröffentlichungstag:
07.09.2005 Patentblatt 2005/36

(51) Int Cl.⁷: C08G 18/40, C08G 18/42, C08G 18/48, C08J 9/12, C08J 9/32

(21) Anmeldenummer: 05003624.3

(22) Anmeldetag: 19.02.2005

(84) Benannte Vertragsstaaten:
AT BE BG CH CY CZ DE DK EE ES FI FR GB GR HU IE IS IT LI LT LU MC NL PL PT RO SE SI SK TR
Benannte Erstreckungsstaaten:
AL BA HR LV MK YU

(30) Priorität: 05.03.2004 DE 102004010809

(71) Anmelder: Bayer MaterialScience AG
51368 Leverkusen (DE)

(72) Erfinder:
• Grimm, Wolfgang
51381 Leverkusen (DE)
• Michels, Erhard, Dr.
51061 Köln (DE)
• Brecht, Klaus
51399 Burscheid (DE)
• Pfeuffer, Uwe
51377 Leverkusen (DE)

(54) **Flexible Formteile aus geschäumtem Polyurethan und ihre Verwendung**

(57) Die Erfindung betrifft flexible Formteile aus geschäumtem Polyurethan mit Formteildichten von <350 kg/m³ und mit einseitig dicker Haut und guter Formteilstabilität (Formteilschwindung < 1,5 %; gemäß DIN ISO 02769) auf Basis spezieller Komponenten und ihre Verwendung, insbesondere im Schuhbereich.

**Beschreibung**

Die Erfindung betrifft flexible Formteile aus geschäumtem Polyurethan mit Formteildichten von <350 kg/m$^3$ und mit einseitig dicker Haut und guter Formteilstabilität (Formteilschwindung <1,5 %; gemäß DIN ISO 02769) auf Basis spezieller Komponenten und ihre Verwendung, insbesondere im Schuhbereich.

Verfahren zur Herstellung von flexiblen mikrozellularen Elastomeren mit niedriger Dichte werden in EP-A 1 225 199 beschrieben. Bei diesen Verfahren wird als Treibmittel $CO_2$ eingesetzt, welches in den Isocyanat- und/oder Polyolkomponenten gelöst wird. Anschließend wird verschäumt. Der Nachteil dieser Technologie ist, dass hierbei, bedingt durch die niedrigen Formteildichten (meist < 300 kg/m$^3$), nur eine dünne, nicht verschleißfeste Haut ausgebildet wird.

Aufgabe der vorliegenden Erfindung war es, ein Verfahren zur Verfügung zu stellen, mit dem es möglich ist, Formteile mit niedrigen Dichten und hoher Verschleißfestigkeit herzustellen.

Diese Aufgabe konnte durch das erfindungsgemäße Verfahren bzw. durch die erfindungsgemäßen Formteile gelöst werden. Die Verschleißfestigkeit wird dabei durch eine dicke Haut, die einseitig auf der Verschleißseite des Formteils mit Integralstruktur erzeugt wird, erreicht.

Gegenstand der Erfindung sind flexible Formteile aus geschäumtem Polyurethan mit mittleren Formteildichten von < 350 kg/m$^3$, bevorzugt von < 300 kg/m$^3$ und mit einer einseitig verdichteten Randzone mit einer Dicke von 0,5 mm-3 mm, vorzugsweise 0,7 mm-2,5 mm, die eine mittlere Dichte von > 650 kg/m$^3$ und eingeschlossene Mikrohohlkugeln aufweist, mit einer Formteilschwindung von < 1,5 % (gemäß DIN ISO 02769) erhältlich aus

a) einem oder mehreren organischen Isocyanaten mit 2 bis 4 NCO-Gruppen pro Molekül und einem NCO-Gehalt von 6-49 Gew.%;

b) einer oder mehreren Polyolkomponenten aus der Gruppe bestehend aus

b1) Polyetheresterpolyolen mit einem zahlenmittleren Molekulargewicht von 800 g/mol bis 6000 g/mol, bevorzugt von 1200 g/mol bis 4000 g/mol, einer mittleren Funktionalität von 1,7 bis 4, bevorzugt von 1,8 bis 2,7 und einem Gewichtsverhältnis von Ethergruppen zu Estergruppen des Polyetheresterpolyols von 5:95 bis 48:52, bevorzugt von 8 zu 92 bis 30 zu 70,
wobei die Polyetheresterpolyole erhältlich sind durch Polykondensation von

b1.1) einer oder mehreren Dicarbonsäuren mit bis zu 12 Kohlenstoffatomen und/oder deren Derivaten,

b1.2) einer oder mehreren Polyetherpolyolkomponenten aus der Gruppe bestehend aus Polyetherpolyolen mit einem zahlenmittleren Molekulargewicht von 1000 g/mol bis 8000 g/mol, bevorzugt von 1500 g/ mol bis 6000 g/mol, einer Ethylenoxidgehalt von 10 bis 40 Gew.-%, bevorzugt von 15 bis 35 Gew-%, besonders bevorzugt 18 bis 32 Gew-%, und Ether-basierten Polymerpolyolen mit OH-Zahlen von 10 bis 149 und mittleren Funktionalitäten von 1,7 bis 4, bevorzugt von 1,8 bis 3,5, die 1 bis 50 Gew.-%, vorzugsweise 1 bis 45 Gew.-% Füllstoffe, bezogen auf die Gesamtmenge an Polymerpolyol enthalten,

b1.3) einem oder mehreren Polyolen mit einem zahlenmittleren Molekulargewicht von 62 bis 750 g/mol, bevorzugt von 62 g/mol bis 400 g/mol, besonders bevorzugt von 62 g/mol bis 200 g/mol, einer mittleren Funktionalität von 2 bis 8 und mit mindestens 2 endständigen OH-Gruppen pro Molekül,

b1.4) gegebenenfalls Ester- basierte Polymerpolyole, die OH-Zahlen von 10 bis 149 und mittlere Funktionalitäten von 1,7 bis 4, bevorzugt von 1,8 bis 3,5 aufweisen und die 1 bis 50 Gew.-%, vorzugsweise 1 bis 45 Gew.% Füllstoffe, bezogen auf die Gesamtmenge an Polymerpolyol enthalten,

und

b2) einer Mischung aus

b2.1) einer oder mehreren Polyesterpolyolkomponenten aus der Gruppe bestehend aus Polyesterpolyolen mit einem zahlenmittleren Molekulargewicht von 1000 bis 4000 g/mol und einer mittleren Funktionalität von 1,7 bis 4 und Ester-basierten Polymerpolyolen mit OH-Zahlen von 10 bis 149 und mittleren Funktionalitäten von 1,7 bis 4, bevorzugt von 1,8 bis 3,5, die 1 bis 50 Gew.-%, vorzugsweise 1 bis 45 Gew.-% Füllstoffe, bezogen auf die Gesamtmenge an Polymerpolyol enthalten,

b2.2) 5 bis 48 Gew.-%, bevorzugt 8 bis 30 Gew.%, bezogen auf b2) einer oder mehrerer Polyetherpolyolkomponenten aus der Gruppe bestehend aus Ethylenoxidgruppen enthaltenden Polyetherpolyolen mit jeweils einem zahlenmittleren Molekulargewicht von 900 bis 18000 g/mol, bevorzugt 2000 bis 8000 g/mol, einer mittleren Funktionalität von 1,7 bis 4, bevorzugt 1,8 bis 2,7 und einem Ethylenoxidgehalt von 10 bis 40 Gew.-%, bevorzugt 15 bis 35 Gew.-%, besonders bevorzugt 18 bis 32 Gew.-% und Ether-basierten Polymerpolyolen, die OH-Zahlen von 10 bis 149 und mittlere Funktionalitäten von 1,7 bis 4, bevorzugt von 1,8 bis 3,5 aufweisen und die 1 bis 50 Gew.-%, vorzugsweise 1 bis 45 Gew.-% Füllstoffe, bezogen auf die Gesamtmenge an Polymerpolyol enthalten,

oder anstelle von b2) entweder

b3) einer oder mehreren Polyetherpolyol-Komponenten mit einer mittleren Hydroxylfunktionaltät von 2,02 bis 2,95 aus

b3.1) mindestens einem Polyetherdiol mit einer Hydroxylzahl von 10 bis 115, das durch Propoxylierung eines difunktionellen Starters und anschließender Ethoxylierung des Propoxylierungsproduktes unter Einhaltung eines Gewichtsverhältnisses von Propylenoxid zu Ethylenoxid von 60 : 40 bis 85 : 15 hergestellt worden ist, und

b3.2) mindestens einem, gegebenenfalls Füllstoffe auf Basis von Styrol-Acrylnitril-Copolymerisaten, Polyhamstoffen oder Polyhydrazocarbonamiden in einer Menge von bis zu 20 Gewichtsprozent, bezogen auf das Gesamtgewicht der Komponente b3), enthaltenden Polyethertriol mit einer Hydroxylzahl von 12 bis 56, das durch Propoxylierung eines trifunktionellen Starters und anschließender Ethoxylierung unter Einhaltung eines Gewichtsverhältnisses von Propylenoxid zu Ethylenoxid von 60 : 40 bis 85 : 15 hergestellt worden ist,

oder

b4) einer oder mehreren gegebenenfalls 1 bis 50 Gew.-%, vorzugsweise 1 bis 45 Gew.-% Füllstoffe, bezogen auf b4), enthaltenen Polyesterpolyolkomponenten aus der Gruppe bestehend aus Polyesterpolyolen mit einem zahlenmittleren Molekulargewicht von 1000 bis 4000 g/mol und einer mittleren Funktionalität von 1,7 bis 4 und Ester-basierten Polymerpolyolen mit OH-Zahlen von 10 bis 149 und mittleren Funktionalitäten von 1,7 bis 4, bevorzugt von 1,8 bis 3,5 und 1 bis 50 Gew.-% Füllstoffen, bezogen auf b4),

c) 5 bis 25 Gew.-%, bezogen auf die Summe der Komponente b) und c) an Vemetzungsmitteln/Kettenverlängerern

d) einer Mischung aus Treibmittelkomponenten bestehend aus

d1) Stickstoff, Luft und/oder Kohlendioxid und

d2) wenigstens einer Komponente aus der Gruppe bestehend aus chemischen Treibmitteln und physikalischen Treibmitteln mit Siedepunkten im Bereich von -30°C bis 75°C und

d3) physikalisch expandierenden Mikrohohlkugeln

e) gegebenenfalls Emulgatoren,

f) gegebenenfalls Zusatz- und Hilfsmitteln,

g) gegebenenfalls Katalysatoren,

wobei die Kennzahl 95 bis 115 beträgt.

Die eingesetzte Komponente d1) wird bevorzugt zur Polyolkomponente b) und/oder zum Isocyanat a) zugesetzt. Die Komponente d2) wird bevorzugt der Polyolkomponente b) zugesetzt. Die Komponente d3) kann separat zudosiert oder der Komponente b) zugesetzt werden.

Kennzahl bedeutet das Molverhältnis der NCO-Gruppen aus dem eingesetzten Isocyanat zu den NCO-reaktiven Endgruppen aus den Komponenten b), c) und d) multipliziert mit 100. Eine Kennzahl von 100 entspricht einer stöchiometrischen Menge Isocyanatgruppen zu NCO-reaktiven Endgruppen.

OH-Zahl (Hydroxylzahl) bedeutet das Molekulargewicht von KOH multipliziert mit 1000 und mit der Funktionalität des Polyols und dividiert durch das Molekulargewicht des Polyols.

Ein weiterer Gegenstand der Erfindung ist ein Verfahren zur Herstellung der erfindungsgemäßen flexiblen Formteile aus geschäumtem Polyurethan mit mittleren Formteildichten von < 350 kg/m$^3$, bevorzugt von <300 kg/m$^3$ und mit einer einseitig verdichteten Randzone mit einer Dicke von 0,5-3 mm, bevorzugt 0,7-2,5 mm, die eine mittlere Dichte von > 650 kg/m$^3$ und eingeschlossene Mikrohohlkugeln aufweist, mit einer Formteilschwindung von < 1,5 % (gemäß DIN ISO 02769), welches dadurch gekennzeichnet ist, dass

A) die Komponente a) mit der Komponente b) und der Komponente c) unter Zusatz der Komponenten d), e) und f) in Gegenwart der Komponente g) in einer Form zur Reaktion gebracht werden, wobei eine Kennzahl von 95 bis 115 eingestellt wird,

B) das hergestellte Formteil aus der Form entfernt wird.

Als Ausgangskomponente a) für die erfindungsgemäßen Formteile eignen sich aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der n = 2-4, vorzugsweise 2, und Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten, z.B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan, 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'-diphenylmethan-diisocyanat, 1,3- und 1,4-Phenylendiisocyanat, 1,4-Duroldiisocyanat (DDI), 4,4'-Stilbendiisocyanat, 3,3'-Dimethyl-4,4'-biphenylendiisocyanat (TODI) 2,4- und 2,6-Toluylendiisocyanat (TDI) sowie beliebige Gemische dieser Isomeren, Diphenylmethan-2,4'- und/oder -4,4'-diisocyanat (MDI), oder Naphthylen-1,5-diisocyanat (NDI) geeignet..

Ferner kommen beispielsweise in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-PS 874 430 und GB-PS 848 671 beschrieben werden, mund p-Isocyanatophenylsulfonylisocyanate gemäß US-PS 3 454 606, perchlorierte Arylpolyisocyanate, wie sie in US-PS 3 277 138 beschrieben werden, Carbodiimidgruppen aufweisende Polyisocyanate, wie sie in US-PS 3 152 162 sowie in DE-OS 25 04 400, 25 37 685 und 25 52 350 beschrieben werden, Norboman-diisocyanate gemäß US-PS 3 492 301, Allophanatgruppen aufweisende Polyisocyanate, wie sie in GB-PS 994 890, der BE-PS 761 626 und NL-A 7 102 524 beschrieben werden, Isocyanuratgruppen aufweisende Polyisocyanate, wie sie in US-PS 3 001 9731, in DE-PS 10 22 789, 12 22 067 und 1 027 394 sowie in DE-OS 1 929 034 und 2 004 048 beschrieben werden, Urethangruppen aufweisende Polyisocyanate, wie sie z.B. in der BE-PS 752 261 oder in US-PS 3 394 164 und 3 644 457 beschrieben werden, acylierte Harnstoffgruppen aufweisende Polyisocyanate gemäß DE-PS 1 230 778, Biuretgruppen aufweisende Polyisocyanate, wie sie in US-PS 3 124 605, 3 201 372 und 3 124 605 sowie in GB-PS 889 050 beschrieben werden, durch Telomerisationsreaktionen hergestellte Polyisocyanate, wie sie in US-PS 3 654 106 beschrieben werden, Estergruppen aufweisende Polyisocyanate, wie sie in GB-PS 965 474 und 1 072 956, in US-PS 3 567 763 und in DE-PS 12 31 688 genannt werden, Umsetzungsprodukte der obengenannten Isocyanate mit Acetalen gemäß DE-PS 1 072 385 und polymere Fettsäureester enthaltende Polyisocyanate gemäß US-PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), 4,4'-Diphenylmethandiisocyanat, 2,4'-Diphenylmethandiisocyanat, 2,2'-Diphenylmethandiisocyanat und Polyphenyl-polymethylen-polyisocyanate, wie sie durch Anilin-Formaldehyd-Kondensation und anschließende Phosgenierung hergestellt, werden ("rohes MDI") und Carbodiimidgruppen, Uretonimin, Uretonimingruppen, Urethangruppppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten. Gut geeignet sind auch Naphthylen-1,5-diisocyanat und Gemische der genannten Polyisocyanate.

Besonders bevorzugt werden im erfindungsgemäßen Verfahren jedoch Isocyanatgruppen aufweisende Prepolymere verwendet, die hergestellt werden durch Umsetzung mindestens einer Teilmenge der Polyolkomponente b1), b2.1), b2.2) oder deren Mischung und/oder Kettenverlängerer/Vernetzer c) mit mindestens einem aromatischen Diisocyanat aus der Gruppe TDI, MDI, TODI, DIBDI, NDI, DDI, vorzugsweise mit 4,4'-MDI und/oder 2,4-TDI und/oder 1,5-NDI zu einem Urethangruppen und Isocyanatgruppen aufweisenden Polyadditionsprodukt mit einem NCO-Gehalt von 6 bis 35 Gew.-%, vorzugsweise von 10 bis 25 Gew.-%.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung erst zur Herstellung der PUR-Elastomere einzuverleiben. Zur Viskositätsveränderung und höheren Gasaufnahme können dem Prepolymer auch nicht reaktive Zusätze, niedermolekulare Ester, wie Phthalate, Adipate, aber auch Ringester, cyklische Carbonate, endständig geblockte Polyether beigefügt werden.

Unter "Polyetheresterpolyol" wird eine Verbindung verstanden, die Ethergruppen, Estergruppen und OH-Gruppen aufweist.

Die erfindungsmäß zu verwendenden Polyetheresterpolyole b1) weisen ein zahlenmittleres Molekulargewicht von 800 g/mol bis 6000 g/mol, bevorzugt von 1200 g/mol bis 4000 g/mol auf, haben eine zahlenmittlere Hydroxylfunktionalität von 1,7 bis 4, bevorzugt von 1,8 bis 2,7 und ein Gewichtsverhältnis von Ethergruppen zu Estergruppen von 5:95 bis 48:52, besonders bevorzugt von 8:92 bis 30:70.

Organische Dicarbonsäuren b1.1) mit bis zu 12 Kohlenstoffatomen sind zur Herstellung der Polyetheresterpolyole geeignet, vorzugsweise aliphatische Dicarbonsäuren mit 4 bis 6 Kohlenstoffatomen, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure genannt. Bevorzugt geeignet sind Fumarsäure und Bernsteinsäure und besonders bevorzugt geeignet sind Glutarsäure und Adipinsäure. Als Derivate dieser Säuren können beispielsweise deren Anhydride sowie deren Ester und Halbester mit niedermolekularen, monofunktionellen Alkoholen mit 1 bis 4 Kohlenstoffatomen eingesetzt werden.

Als Komponente b1.2) zur Herstellung der Polyetheresterpolyole b1) werden Polyetherpolyole eingesetzt, die man durch Alkoxylieren von Startermolekülen, bevorzugt mehrwertigen Alkoholen; erhält. Die Startermoleküle sind mindestens difunktionell, können aber gegebenenfalls auch Anteile höherfunktioneller insbesondere trifunktioneller Startermoleküle enthalten. Das Alkoxylieren erfolgt üblicherweise in zwei Schritten. Zuerst wird in Gegenwart basischer Katalysatoren oder Doppelmetallcyanid-Katalysatoren mit bevorzugt Propylenoxid oder weniger bevorzugt 1,2-Butylenoxid oder weniger bevorzugt 2,3-Butylenoxid alkoxyliert und danach mit Ethylenoxid ethoxyliert. Der Anteil von Ethylenoxid im Polyetherpolyol beträgt 10 Gew.-% bis 40 Gew.-%, bevorzugt 15 Gew.-% bis 35 Gew.-%, besonders bevorzugt 18 Gew.-% bis 32 Gew.-%. Es können als Komponente b1.2) Ether-basierte Polymerpolyole mit OH-Zahlen von 10 bis 149 und mittleren Funktionalitäten von 1,7 bis 4 eingesetzt werden, die 1 bis 50 Gew.-% Füllstoffe, bezogen auf die Gesamtmenge an Polymerpolyol enthalten.

Zur Komponente b1.3) zählen vorzugsweise Diole mit primären OH-Gruppen und zahlenmittleren Molekulargewichten von 62 g/mol bis 750 g/mol, bevorzugt von 62 g/mol bis 400 g/mol, besonders bevorzugt von 62 g/mol bis 200 g/mol. Beispielhaft seien 1,3-Propandiol, 1,5-Pentendiol, 1,5-Pentandiol, Neopentylglykol, 1,6-Hexandiol, 1,7-Heptandiol, Octandiol-1,8, 1,10-Decandiol, 2-Methyl-1,3-propandiol, 2,2-Dimethyl-1,3-propandiol, 3-Methyl-1,5-pentandiol; 2-Butyl-2-ethyl-1,3-propandiol, 2-Buten-1,4-diol und 2-Butin-1,4-diol, Triethylenglykol, Tetraethylenglykol, Dibutylenglykol, Tributylenglykol, Tetrabutylenglykol, Dihexylenglykol, Trihexylenglykol, Tetrahexylenglykol, Oligomerengemische von Alkylenglykolen und insbesondere 1,2-Ethandiol, 1,4-Butandiol und Diethylenglykol genannt.

Neben den Diolen können auch Polyole mit zahlenmittleren Funktionalitäten oberhalb von 2 bis zu 8, bevorzugt von 2,1 bis 5, besonders bevorzugt von 3 bis 4, mitverwendet werden, z.B. 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von 62 g/mol bis 750 g/mol, bevorzugt von 62 g/mol bis 400 g/mol, besonders bevorzugt von 62 g/mol bis 200 g/mol.

Aus der Gruppe der Diole kann jedes für sich einzeln oder in Kombination mit anderen Diolen und Polyolen eingesetzt werden. Die Di- und Polyole können auch nachträglich zu einem Polyesterpolyol zugesetzt werden, auch wenn sie dadurch nicht bzw. nicht bis zum Erreichen des Polykonsationsgleichgewichtes in der Veresterungsreaktion umgesetzt werden. Der relative Mengeneinsatz von Polyolen wird begrenzt durch die vorgegebene zahlenmittlere Hydroxylfunktionalität des Polyetheresterpolyols b1).

Als Polymerpolyole unter b1.4), unter b2.1) und unter b4) eignen sich polymermodifizierte Polyole, insbesondere Pfropfpolymerpolyole auf Basis von Polyestern oder Polyetherestern. Als Pfropfkomponente eignen sich insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, hergestellt werden. Die Polymerpolyole können als Polyol-Dispersionen vorliegen, die als disperse Phase - üblicherweise in Mengen von 1 bis 50 Gew.-%, vorzugsweise 1 bis 45 Gew.-%, bezogen auf Polymerpolyol, z.B. Polyharnstoffe (PHD), Polyhydrazide, tert.-Aminogruppen gebunden enthaltende Polyurethane enthalten.

Die Mischung b2) besteht aus b2.1) und b2.2).

Geeignete Polyesterpolyole unter b2.1) und unter b4) können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Malonsäure, Glutarsäure Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono- und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 / 35 bis 50 / 20 bis 32 Gew.-Teilen, und insbesondere Adipinsäure. Beispiele für zwei- und mehrwertige Alkohole sind Ethandiol, Diethylenglykol, 1,2- bzw. 1,3-Propandiol, Dipropylenglykol, Methyl- Propandiol-1,3, 1,4-Butandiol, 1,5-Pentandiol 1,6-Hexandiol, Neopentylglykol, 1,10-Decandiol, Glycerin; Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, Diethylenglykol, 1,4-Butandiol und 1,6-Hexandiol, Glycerin und/oder Trimethylolpropan. Eingesetzt werden können ferner Polyesterpolyole aus Lactonen z.B. $\varepsilon$-Caprolacton oder Hydroxycarbonsäuren, z. B. o-Hydroxycapronsäure und Hydroxyessigsäure. Als geeignete Polyesterpolyole sind ferner Hydroxylgruppen aufweisende Polycarbonate zu nennen.

Bevorzugt werden Polyesterpolyole mit einem zahlenmittlerem Molekulargewicht von 1000 bis 4000, und einer Funktionalität von 1,7 bis 4, vorzugsweise 1,8 bis 3,5.

Als Polymerpolyole unter b2.1) eignen sich die polymermodifizierten Polyole, die auch unter b1.4) bereits genannt wurden.

Unter der Komponente b2.2) und der Komponente b3) werden Polyetherpolyole eingesetzt, die man durch Alkoxylieren von Startermolekülen, bevorzugt mehrwertigen Alkoholen, erhält. Die Startermoleküle sind mindestens difunktionell, können aber gegebenenfalls auch Anteile höherfunktioneller insbesondere trifunktioneller Startermoleküle enthalten. Das Alkoxylieren erfolgt üblicherweise in zwei Schritten. Zuerst wird in Gegenwart basischer Katalysatoren oder Doppelmetallcyanid-Katalysatoren mit bevorzugt Propylenoxid oder weniger bevorzugt 1,2-Butylenoxid oder weniger bevorzugt 2,3-Butylenoxid alkoxyliert und danach mit Ethylenoxid ethoxyliert. Der Anteil von Ethylenoxid im Polyetherpolyol beträgt von 10 Gew.-% bis 40 Gew.-%, bevorzugt 15 Gew.-% bis 35 Gew.-%, besonders bevorzugt 18 Gew.-% bis 32 Gew.-%.

Die unter b2.2) eingesetzten Ether-basierten Polymerpolyole sind vorzugsweise polymermodifizierte Polyole, insbesondere Pfropfpolymerpolyole auf Basis von Polyethern. Als Pfropfkomponente eignen sich insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, hergestellt werden. Die Polymerpolyole können als Polyol-Dispersionen vorliegen, die als disperse Phase - üblicherweise in Mengen von 1 bis 50 Gew.-%, vorzugsweise 1 bis 45 Gew.-%, bezogen auf Polymerpolyol, z.B. Polyharnstoffe (PHD), Polyhydrazide und tert.-Aminogruppen gebunden enthaltende Polyurethane enthalten.

Als Komponente c) werden Kettenverlängerer und/oder Vernetzer eingesetzt.

Derartige Kettenverlängerer/Vernetzer werden zur Modifizierung der mechanischen Eigenschaften, insbesondere der Härte des Formteils eingesetzt. Geeignet sind vorzugsweise Diole mit primären OH-Gruppen und zahlenmittleren Molekulargewichten unter 750 g/mol, bevorzugt von 62 g/mol bis 400 g/mol, besonders bevorzugt von 62 g/mol bis 200 g/mol. Beispielhaft seien 1,3-Propandiol, 1,5-Pentendiol, 1,5-Pentandiol, Neopentylglykol, 1,6-Hexandiol, 1,7-Heptandiol, Octandiol-1,8, 1,10-Decandiol, 2-Methyl-1,3-propandiol, 2,2-Dimethyl-1,3-propandiol, 3-Methyl-1,5-pentandiol; 2-Butyl-2-ethyl-1,3-propandiol, 2-Buten-1,4-diol und 2-Butin-1,4-diol, Triethylenglykol, Tetraethylenglykol, Dibutylenglykol, Tributylenglykol, Tetrabutylenglykol, Dihexylenglyköl, Trihexylenglykol, Tetrahexylenglykol, Oligomerengemische von Alkylenglykolen und insbesondere 1,2-Ethandiol, 1,4-Butandiol und Diethylenglykol genannt.

Neben den Diolen können auch Polyole mit zahlenmittleren Funktionalitäten oberhalb von 2 bis zu 8, bevorzugt von 2,1 bis 5, besonders bevorzugt von 3 bis 4, mitverwendet werden, z.B. 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten unter 750 g/mol, bevorzugt von 62 g/mol bis 400 g/mol, besonders bevorzugt von 62 g/mol bis 200 g/mol.

Aus der Gruppe der Diole kann jedes für sich einzeln oder in Kombination mit anderen Diolen und Polyolen eingesetzt werden.

Vernetzer sind zusätzlich zu den vorgenannten Polyolen, z.B. Triole, Tetraole, oligomere Polyalkylenpolyole, aromatische und aliphatische Amine und Diamine mit einer Funktionalität von 2 bis 8, bevorzugt von 2 bis 4, die üblicherweise Molekulargewichte kleiner 750 g/mol besitzen, vorzugsweise von 62 bis 400 g/mol, besonders bevorzugt von 62 bis 200 g/mol.

Die Komponente c) liegt vorzugsweise in einer Menge von 5 bis 25 Gew.-%, bezogen auf die Summe der Komponenten b) und c) vor.

Als Treibmittelkomponente d) werden Mischungen von d1), d2) und d3) eingesetzt, wobei d1) aus der Gruppe Stickstoff, Luft und/oder Kohlendioxid stammt. Hierbei ist es vorteilhaft, wenn diese Gase aus d1) oberhalb atmosphärischem Druck den Komponenten a) und/oder b) zugesetzt werden, vorzugsweise zwischen 1 und 11 bar absolut.

Als Treibmittelkomponente d2) können physikalische Treibmittel, die unter dem Einfluss der exothermen Polyadditionsreaktion verdampfen und vorzugsweise einen Siedepunkt unter Normaldruck im Bereich von -30 bis 75°C haben, eingesetzt werden. Es können auch chemische Treibmittel, wie z.B. Wasser und Carbamate eingesetzt werden. Beispielhaft seien genannt: Aceton, Ethylacetat, halogensubstituierte Alkane, perhalogenierte Alkane, wie R134a, R141b, R365mfc, R245fa, Butan, Pentan, Cyclopentan, Hexan, Cyclohexan, Heptan oder Diethylether. Eine Treibwirkung kann auch durch Zusatz von Verbindungen erzielt werden, die sich bei Temperaturen oberhalb der Raumtemperatur unter Abspaltung von Gasen, beispielsweise von Stickstoff und/oder Kohlendioxid, zersetzen, wie Azoverbindungen, z.B. Azodicarbonamid oder Azoisobuttersäurenitril, oder Salze, wie Ammoniumbicarbonat, Ammoniuincarbamat oder Ammoniumsalze organischer Carbonsäuren, z.B. Monoammoniumsalze der Malonsäure, Borsäure, Ameisensäure oder Essigsäure. Weitere Beispiele für Treibmittel sowie Einzelheiten über die Verwendung von Treibmitteln sind in R. Vieweg, A. Höchtlen (Hrsg.): "Kunststoff-Handbuch", Band VII, Carl-Hanser-Verlag, München 3. Auflage, 1993, S.115 bis 118, 710 bis 715 beschrieben.

Als Treibmittelkomponente d3) werden vorzugsweise Mikrohohlkugeln mit eingeschlossenen Treibgasen oder Flüssigkeiten mit Siedepunkten zwischen -30 und +75°C und thermoplastisch verformbarer Haut eingesetzt werden, wie sie in US-A 5 260 343 beschrieben sind und z. B. von der Firma AKZO NOBEL hergestellt und vertrieben werden.

Vorzugsweise kann bei Bedarf auch ein Emulgator e) zugesetzt werden, insbesondere bei Einsatz von Wasser als Komponente d2).

Als Komponente e) können anionische, kationische, amphotere oder nichtionische (neutrale) Emulgatoren eingesetzt werden.

Zur Herstellung der Formteile können gegebenenfalls weitere Zusatzstoffe f) verwendet werden. Genannt seien beispielsweise oberflächenaktive Zusatzstoffe, wie Schaumstabilisatoren, Zellregler, Flammschutzmittel, Keimbildungsmittel, Oxidationsverzögerer, Stabilisatoren, Gleit- und Entformungsmittel, Füllstoffe, Farbstoffe, Dispergierhilfen und Pigmente. Es können auch Reaktionsverzögerer, Flammschutzmittel, Antistatika, Stabilisatoren gegen Alterungs- und Witterungseinflüsse, Weichmacher, Viskositätsregler und fungistatisch und bakteriostatisch wirkende Substanzen eingesetzt werden.

Als Komponente g) können die bekannten Aminkatalysatoren eingesetzt werden, z.B. tertiäre Amine, wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe, 1,4-Diaza-bicyclo-[2,2,2]-octan, N-Methyl-N'-dimethylaminoethyl-piperazin, Bis-(dimethylaminoalkyl)-piperazine, N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenylethyl-amin, Bis-(dimethylaminopropyl)-harnstoff, Bis-(dimethylaminopropyl)-amin, 1,2-Dimethylimidazol, 2-Methylimidazol, Diazabicycloundecen, monocyclische und bicyclische Amidine, Bis-(dialkylamino)-alkylether, wie z.B. Bis(dimethylaminoethyl)ether, sowie Amidgruppen (vorzugsweise Formamidgruppen) aufweisende tertiäre Amine. Als Katalysatoren kommen auch Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, N-Nonylphenol oder Bisphenol A, in Frage. Gegenüber Isocyanatgruppen Zerewittinoff-aktive Wasserstoffatome aufweisende tertiäre Amine als Katalysator sind z.B. Triethanolamin, Triisopropanolamin, N-Methyl-diethanolamin, N-Ethyl-diethanolamin, N, N-Dimethyl-ethanolamin, deren Umsetzungsprodukte mit Alkylenoxiden wie Propylenoxid und/oder Ethylenoxid sowie sekundär-tertiäre Amine. Als Katalysatoren können ferner Silaamine mit Kohlenstoff-Silizium-Bindungen eingesetzt werden, z.B. 2,2,4-Trimethyl-2-silamorpholin und 1,3-Diethyl-aminomethyltetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt. Erfindungsgemäß können auch organische Metallverbindungen des Zinns, Titans, Bismuts, insbesondere organische Zinnverbindungen, als zusätzliche Katalysatoren mitverwendet werden. Als organische Zinnverbindungen kommen neben schwefelhaltigen Verbindungen, wie Di-n-octylzinn-mercaptid, vorzugsweise Zinn(II)-salze von Carbonsäuren, wie Zinn(II)-acetat, Zinn(II)-octoat, Zinn(II)-ethylhexoat, Zinn(II)-laurat und Zinn(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht.

Aus den Komponenten a) bis f) können die erfindungsgemäßen Formteile formgenau und ohne sogenannte Kemverbrennung hergestellt werden.

Die Formteile werden bevorzugt als besonders leichte Schuhsohlen, insbesondere für Badelatschen, Strandsandalen und Hausschuhe eingesetzt. Sie können auch als Platten und Schuhbauteile verwendet werden.

Die Erfindung soll anhand der nachfolgenden Beispiele näher erläutert werden.

### Beispiele

Die Versuche wurden auf Schneckengießmaschinen der Firma Desma durchgeführt. Hierbei wurde entweder 2- (für Test 9) oder 3-komponentig (für Tests 1 bis 8) dosiert:

2-komponentig: Komponente A: Polyolgemisch und Komponente B: Isocyanat

3-komponentig: Komponente A: Polyolgemisch; Komponente B: Isocyanat; Komponente C: batch bestehend aus einem Teil von A plus Mikrohohlkugeln

Die Produkttemperaturen wurden der Rohstoffbasis angepasst. Polyesterbasis: 40 bis 45°C: Polyetherbasis: 30 bis 35°C. Die Formtemperaturen wurden zwischen 53 und 60°C gehalten.

Das $CO_2$ wurde mittels Begasungsgerät der Fa. Desma dem Polyol oder dem Polyol und dem Isocyanat zugeführt.

Eingesetzte Rohstoffe:

| | |
|---|---|
| Polyisocyanat 1: | Desmodur®PF der Bayer MaterialScience AG |
| Polyisocyanat 2: | Desmodur®VP PU 0926 der Bayer MaterialScience AG |
| Polyol 1: | EG-BD-(Polypropylen-ethylenoxid)-Adipat, OH-Zahl 55 |
| Polyol 2: | EG-BD-Polyadipat; OH-Zahl 55 |
| Polyol 3: | PO-EO(80/20)-Polyol, OH-Zahl 28 (endständiges EO), Molekulargewicht: 4000 |
| Polyol 4: | PO-EO(85/15)-Polyol, TMP gestartet, -OH-Zahl 27, Molekulargewicht: 6000 |
| Emulgator 1: | Emulgator der Bayer MaterialScience AG, Diphenylpolyglycolether, OH-Zahl 80, Molekulargewicht 450 |
| Emulgator 2: | Weichmacher der Bayer MaterialScience AG, Diisophthalat |
| Emulgator 3: | Adimoll DO der Bayer MaterialScience AG |
| Stabilisator 1: | OS22 der Bayer MaterialScience AG |
| Stabilisator 2: | DC 190 von Air Products |
| Katalysator 1: | Dabco® 1027 von Air Products |
| Katalysator 2: | Dabco® BL-11 von Air Products |
| Katalysator 3: | UL 1 von Crompton |
| Dabco® in EG: | 80 Gew.-% Dabco® gelöst in 20 Gew.-% Ethylenglycol (Katalysator) |
| Tela: | Triethanolamin (Komponente c)) |

Beispiele auf Polyesterbasis

| | | Bsp. 1 | Bsp. 2 | Bsp. 3 | Bsp. 4 | Bsp. 5 |
|---|---|---|---|---|---|---|
| Polyol 1 | Gew.-Tle | - | - | - | - | 74,456 |
| Polyol 2 | Gew.-Tle | 65,504 | 65,504 | 65,504 | 74,546 | - |
| Polyol 3 | Gew.-Tle | 9,042 | 9,042 | 9,042 | - | - |
| Ethandiol | Gew.-Tle | 13,111 | 13,111 | 13,111 | 13,111 | 13,111 |
| Tela | Gew.-Tle | 0,407 | 0,407 | 0,407 | 0,407 | 0,407 |
| Dabco® in EG | Gew.-Tle | 0,678 | 0,678 | 0,678 | 0,678 | 0,678 |
| Katalysator 2 | Gew.-Tle | 0,090 | 0,090 | 0,090 | 0,090 | 0,090 |
| Katalysator 1 | Gew.-Tle | 0,452 | 0,452 | 0,452 | 0,452 | 0,452 |
| Emulgator 3 | Gew.-Tle | 4,973 | 4,973 | 4,973 | 4,973 | 4,973 |
| Wasser | Gew.-Tle | 0,452 | 0,452 | 0,452 | 0,452 | 0,452 |

(fortgesetzt)

|  |  | Bsp. 1 | Bsp. 2 | Bsp. 3 | Bsp. 4 | Bsp. 5 |
|---|---|---|---|---|---|---|
| Stabilisator 1 | Gew.-Tle | 0,045 | 0,045 | 0,045 | 0,045 | 0,045 |
| Emulgator 2 | Gew.-Tle | 0,823 | 0,823 | 0,823 | 0,823 | 0,823 |
| Emulgator 1 | Gew.-Tle | 0,353 | 0,353 | 0,353 | 0,454 | 0,353 |
| Expancel DUX 053 | Gew.-Tle | 3,165 | 3,165 | 3,165 | 3,165 | 3,165 |
| gelöstes $CO_2$ | Gew.-% | 0,9 | 0,75 | 0,6 | 0,75 | 0,75 |
| Polyisocyanat 2 | Gew.-Tle | 124 | 124 | 124 | 126 | 126 |
| Freischaumdichte | kg/m$^3$ | 143 | 157 | 167 | 176 | 142 |
| Mittlere Formteildichte | kg/m$^3$ | 260 | 280 | 300 | 320 | 250 |

Beispiele auf Polyetherbasis

|  |  | Bsp. 6 | Bsp. 7 | Bsp. 8 | Bsp. 9 |
|---|---|---|---|---|---|
| Polyol 3 | Gew.-Tle | 37,91 | 37,91 | 37,91 | 76,63 |
| Polyol 4 | Gew.-Tle | 40,00 | 40,00 | 40,00 | 5,0 |
| Ethandiol | Gew.-Tle | 10,00 | 10,00 | 10,00 | 10,0 |
| Dabco® in EG | Gew.-Tle | 0,33 | 0,33 | 0,33 | 0,33 |
| Emulgator 3 | Gew.-Tle | 5,500 | 5,500 | 5,500 | 5,50 |
| Katalysator 3 | Gew.-Tle | 0,02 | 0,02 | 0,02 | 0,02 |
| Katalysator 2 | Gew.-Tle | 0,10 | 0,10 | 0,10 | 0,02 |
| Tela | Gew.-Tle | 0,00 | 0,00 | 0,00 | 0,0 |
| Stabilisator 2 | Gew.-Tle | 0,40 | 0,40 | 0,40 | 0,4 |
| Expancel DUX 053 | Gew.-Tle | 3,500 | 3,500 | 3,500 | 0,0 |
| Wasser | Gew.-% | 0,35 | 0,35 | 0,35 | 0,35 |
| gelöstes $CO_2$ | Gew.-% | 0,90 | 0,75 | 0,60 | 0,75 |
| Polyisocyanat 1 | Gew.-Tle | 74 | 74 | 74 | 74 |
| Freischaumdichte | kg/m$^3$ | 159 | 170 | 183 | 225 |
| Mittlere Formteildichte | kg/m$^3$ | 290 | 310 | 330. | 435 |

Die vorgenannten Beispiele 1 bis 8 zeigten alle auf der Formunterseite eine dickere Hautäusbildung (> 0,5 mm) bzw. eine dickere und höher verdichtete Zone als auf der Formoberseite (Haut: etwa 0,2 mm dick).
In Vergleichsbeispiel 9 hatte das Produkt eine Haut von etwa 0,2 mm auf der Formunterseite wie auf der Formoberseite.

**Patentansprüche**

1. Flexible Formteile aus geschäumtem Polyurethan mit mittleren Formteildichten von < 350 kg/m$^3$, bevorzugt von < 300 kg/m$^3$ und mit einer einseitig verdichteten Randzone mit einer Dicke von 0,5 mm-3 mm, vorzugsweise 0,7 mm-2,5 mm, die eine mittlere Dichte von > 650 kg/m$^3$ und eingeschlossene Mikrohohlkugeln aufweist, mit einer Formteilschwindung von < 1,5 % (gemäß DIN ISO 02769) erhältlich aus

a) einem oder mehreren organischen Isocyanaten mit 2 bis 4 NCO-Gruppen pro Molekül und einem NCO-Gehalt von 6-49 Gew.-%;

b) einer oder mehreren Polyolkomponenten aus der Gruppe bestehend aus

b1) Polyetheresterpolyolen mit einem zahlenmittleren Molekulargewicht von 800 g/mol bis 6000 g/mol, bevorzugt von 1200 g/mol bis 4000 g/mol, einer mittleren Funktionalität von 1,7 bis 4, bevorzugt von 1,8 bis 2,7 und einem Gewichtsverhältnis von Ethergruppen zu Estergruppen des Polyetheresterpolyols von 5 zu 95 bis 48 zu 52, bevorzugt von 8 zu 92 bis 30 zu 70,
wobei die Polyetheresterpolyole erhältlich sind durch Polykondensation von

b1.1) einer oder mehreren Dicarbonsäuren mit bis zu 12 Kohlenstoffatomen und/oder deren Derivaten,

b1.2) einer oder mehreren Polyetherpolyolkomponenten bestehend aus der Gruppe der Polyetherpolyolen mit einem zahlenmittleren Molekulargewicht von 1000 g/mol bis 8000 g/mol, bevorzugt von 1500 g/mol bis 6000 g/mol, einer Ethylenoxidgehalt von 10 bis 40 Gew.-%, bevorzugt von 15 bis 35 Gew-%, besonders bevorzugt 18 bis 32 Gew-%, und Ether-basierten Polymerpolyolen mit OH-Zahlen von 10 bis 149 und mittleren Funktionalitäten von 1,7 bis 4, bevorzugt von 1,8 bis 3,5, die 1 bis 50 Gew.-%, vorzugsweise 1 bis 45 Gew.-% Füllstoffe, bezogen auf die Gesamtmenge an Polymerpolyol enthalten,

b1.3) einem oder mehreren Polyolen mit einem zahlenmittleren Molekulargewicht von 62 bis 750 g/mol, bevorzugt von 62 g/mol bis 400 g/mol, besonders bevorzugt von 62 g/mol bis 200 g/mol, einer mittleren Funktionalität von 2 bis 8 und mit mindestens 2 endständigen OH-Gruppen pro Molekül,

b1.4) gegebenenfalls Ester- basierte Polymerpolyole, die OH-Zahlen von 10 bis 149 und mittlere Funktionalitäten von 1,7 bis 4, bevorzugt von 1,8 bis 3,5 aufweisen und die 1 bis 50 Gew.-%, vorzugsweise 1 bis 45 Gew.-% Füllstoffe, bezogen auf die Gesamtmenge an Polymerpolyol enthalten,

und

b2) einer Mischung aus

b2.1) einer oder mehreren Polyesterpolyolkomponenten aus der Gruppe bestehend aus Polyesterpolyolen mit einem zahlenmittleren Molekulargewicht von 1000 bis 4000 g/mol und einer mittleren Funktionalität von 1,7 bis 4 und Ester-basierten Polymerpolyolen mit OH-Zahlen von 10 bis 149 und mittleren Funktionalitäten von 1,7 bis 4, bevorzugt von 1,8 bis 3,5, die 1 bis 50 Gew.-%, vorzugsweise 1 bis 45 Gew.-% Füllstoffe, bezogen auf die Gesamtmenge an Polymerpolyol enthalten,

b2.2) 5 bis 48 Gew.-%, bevorzugt 8 bis 30 Gew.-%, bezogen auf b2) einer oder mehrerer Polyetherpolyolkomponenten aus der Gruppe bestehend aus Ethylenoxidgruppen enthaltenden Polyetherpolyolen mit jeweils einem zahlenmittleren Molekulargewicht von 900 bis 18000 g/mol, bevorzugt 2000 bis 8000 g/mol, einer mittleren Funktionalität von 1,7 bis 4, bevorzugt 1,8 bis 2,7 und einem Ethylenoxidgehalt von 10 bis 40 Gew.-%, bevorzugt 15 bis 35 Gew.-%, besonders bevorzugt 18 bis 32 Gew.-% und Ether-basierten Polymerpolyolen, die OH-Zahlen von 10 bis 149 und mittlere Funktionalitäten von 1,7 bis 4, bevorzugt 1,8 bis 3,5 aufweisen und die 1 bis 50 Gew.-%, vorzugsweise 1 bis 45 Gew.-% Füllstoffe, bezogen auf die Gesamtmenge an Polymerpolyol enthalten,

oder anstelle von b2) entweder

b3) einer oder mehreren Polyetherpolyol-Komponenten mit einer mittleren Hydroxylfunktionaltät von 2,02 bis 2,95 aus

b3.1) mindestens einem Polyetherdiol mit einer Hydroxylzahl von 10 bis 115, das durch Propoxylierung eines difunktionellen Starters und anschließender Ethoxylierung des Propoxylierungsproduktes unter Einhaltung eines Gewichtsverhältnisses von Propylenoxid zu Ethylenoxid von 60 : 40 bis 85 : 15 hergestellt worden ist, und

b3.2) mindestens einem, gegebenenfalls Füllstoffe auf Basis von Styrol-Acrylnitril-Copolymerisaten, Polyharnstoffen oder Polyhydrazocarbonamiden in einer Menge von bis zu 20 Gewichtsprozent, bezogen auf das Gesamtgewicht der Komponente b3), enthaltenden Polyethertriol mit einer Hydroxyzahl von 12 bis 56, das durch Propoxylierung eines trifunktionellen Starters und anschließender Ethoxylierung unter Einhaltung eines Gewichtsverhältnisses von Propylenoxid zu Ethylenoxid von 60: 40 bis 85 : 15 hergestellt worden ist,
oder

b4) einer oder mehreren gegebenenfalls 1 bis 50 Gew.-%, vorzugsweise 1 bis 45 Gew.-% (bezogen auf die Gesamtmenge der Komponente b4) Füllstoffe, enthaltenden Polyesterpolyolkomponenten aus der Gruppe bestehend aus Polyesterpolyolen mit einem zahlenmittleren Molekulargewicht von 1000 bis 4000 g/mol und einer mittleren Funktionalität von 1,7 bis 4 und Ester-basierten Polymerpolyolen mit OH-Zahlen von 10 bis 149 und mittleren Funktionalitäten von 1,7 bis 4, bevorzugt von 1,8 bis 3,5 und 1 bis 50 Gew.-% Füllstoffen, bezogen auf b4),

c) 5 bis 25 Gew.-%, bezogen auf die Summe der Komponente b) und c) an Vernetzungsmitteln/Kettenverlängerern

d) einer Mischung aus Treibmittelkomponenten bestehend aus

d1) Stickstoff, Luft und/oder Kohlendioxid und

d2) wenigstens einer Komponente aus der Gruppe bestehend aus chemischen Treibmitteln und physikalischen Treibmitteln mit Siedepunkten im Bereich von -30°C bis 75°C und

d3) physikalisch expandierenden Mikrohohlkugeln

e) gegebenenfalls Emulgatoren,

f) gegebenenfalls Zusatz- und Hilfsmitteln,

g) gegebenenfalls Katalysatoren,

wobei die Kennzahl 95 bis 115 beträgt.

**2.** Verfahren zur Herstellung der flexiblen Formteile aus geschäumtem Polyurethan mit mittleren Formteildichten von < 350 kg/m$^3$, bevorzugt < 300 kg/m$^3$ und mit einer einseitig verdichteten Randzone mit einer Dicke von 0,5-3 mm, bevorzugt 0,7-2,5 mm, die eine mittlere Dichte von > 650 kg/m$^3$ und eingeschlossene Mikrohohlkugeln aufweist, mit einer Formteilschwindung von < 1,5 % (gemäß DIN ISO 02769), **dadurch gekennzeichnet, dass**

A) die Komponente a) mit der Komponente b) und der Komponente c) unter Zusatz von Komponenten d), e) und f) in Gegenwart der Komponente g) in einer Form zur Reaktion gebracht werden, wobei eine Kennzahl von 9 bis 115 eingestellt wird,

B) das hergestellte Formteil aus der Form entfernt wird.

**3.** Verwendung der flexiblen Formteile gemäß Anspruch 1 als leichte Schuhsohle, insbesondere für Badelatschen, Strandsandalen und Hausschuhe, als Platte oder Schuhbauteil.

**Europäisches Patentamt**

**EUROPÄISCHER RECHERCHENBERICHT**

Nummer der Anmeldung

EP 05 00 3624

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 260 343 A (HARRISON ET AL) 9. November 1993 (1993-11-09) * Spalte 2, Zeile 10 - Spalte 3, Zeile 55 * * Spalte 7, Zeile 5 - Spalte 9; Tabellen 1,2 * ----- | 1-3 | C08G18/40 C08G18/42 C08G18/48 C08J9/12 C08J9/32 |
| A | US 5 418 257 A (WEISMAN ET AL) 23. Mai 1995 (1995-05-23) * Spalte 3, Zeile 34 - Spalte 6, Zeile 65 * ----- | 1,2 | |
| D,A | EP 1 225 199 A (BAYER ANTWERPEN N.V) 24. Juli 2002 (2002-07-24) * Seite 2, Zeile 40 - Seite 4, Zeile 27 * * Beispiel 1; Tabelle 1 * ----- | 1-3 | |

RECHERCHIERTE SACHGEBIETE (Int.Cl.7)

C08G
C08J

Der vorliegende Recherchenbericht wurde für alle Patentansprüche erstellt

| Recherchenort | Abschlußdatum der Recherche | Prüfer |
|---|---|---|
| München | 14. Juni 2005 | Neugebauer, U |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 00 3624

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2005

| Im Recherchenbericht angeführtes Patentdokument | Datum der Veröffentlichung | Mitglied(er) der Patentfamilie | Datum der Veröffentlichung |
|---|---|---|---|
| US 5260343 A | 09-11-1993 | CA 2107416 A1<br>GB 2273938 A | 05-07-1994<br>06-07-1994 |
| US 5418257 A | 23-05-1995 | US 5332760 A<br>US 5272001 A | 26-07-1994<br>21-12-1993 |
| EP 1225199 A | 24-07-2002 | US 2002132870 A1<br>AT 289329 T<br>AU 1021802 A<br>BR 0200091 A<br>CA 2367077 A1<br>DE 60202975 D1<br>EP 1225199 A1<br>HU 0200183 A2<br>JP 2002241462 A<br>MX PA02000493 A<br>PL 351735 A1<br>SK 422002 A3 | 19-09-2002<br>15-03-2005<br>25-07-2002<br>22-10-2002<br>18-07-2002<br>24-03-2005<br>24-07-2002<br>28-11-2002<br>28-08-2002<br>21-05-2004<br>29-07-2002<br>01-07-2003 |

EPO FORM P0461

Für nähere Einzelheiten zu diesem Anhang : siehe Amtsblatt des Europäischen Patentamts, Nr.12/82